# EUROPEAN PATENT SPECIFICATION

(11) **EP 1 234 235 B1**
(45) Date of publication and mention of the grant of the patent: **24.03.2004**
(21) Application number: 00961598.0
(22) Date of filing: 07.09.2000
(51) Int. Cl.: G06F 11/00

(54) **METHOD AND APPARATUS FOR REMOTELY DEBUGGING COMPUTER SOFTWARE OVER A SERIAL BUS**
VERFAHREN UND VORRICHTUNG ZUR FERNÜBERPRÜFUNG VON RECHNERSOFTWARE UND AUSSCHALTUNG VON FEHLERN
PROCEDE ET DISPOSITIF DE DEBOGGAGE A DISTANCE D'UN LOGICIEL D'ORDINATEUR VIA UN BUS SERIE

(30) Priority: 02.12.1999 US 168537 P; 20.01.2000 US 488015
(43) Date of publication of application: 28.08.2002
(73) Proprietor: MICROSOFT CORPORATION, Redmond, WA 98052 (US)
(72) Inventor: CHRYSANTHAKOPOULOS, Georgios, Redmond, WA 98052 (US); FULLER, John, Nels, Sammamish, WA 98053 (US); RENERIS, Kenneth, S., Woodinville, WA 98072 (US)
(74) Representative: Grünecker, Kinkeldey, Stockmair & Schwanhäusser Anwaltssozietät
(86) International application number: PCT/US2000/024469
(87) International publication number: WO 2001/040940

(56) References cited:
- US-A- 5 845 152
- US-A- 5 911 059
- US-A- 5 978 902
- US-A- 6 094 530
- PROMOTERS OF THE 1394 OPEN HCI: "1394 open host controller interface specification" 1394 OPEN HOST CONTROLLER INTERFACE SPECIFICATION, [Online] no. 1.00draft, 29 September 1997 (1997-09-29), pages 1-168, XP002172050 Retrieved from the Internet: <URL://ftp.austin.ibm.com/pub/chrptech/139 4ohci/draft100.pdf> [retrieved on 2001-07-13]

## Description

### TECHNICAL FIELD

The present invention relates generally to the use of a serial bus as a means of debugging computer software. More particularly, the invention provides a method and apparatus for using a serial bus such as an IEEE 1394 bus to remotely debug, from a host computer, software executing on one or more target computers.

### BACKGROUND OF THE INVENTION

Computer debuggers are conventionally used programs that assist programmers in identifying and correcting errors in software undergoing testing. Debuggers can be used to examine memory locations, step through computer instructions, and manipulate various registers and software variables in a controlled manner.

While some debuggers are used to debug software residing on the same computer as the debugger, other environments require the use of a debugger executing on a first computer to debug software executing on a second computer. In such environments, a hardware link such as a serial connection is used to transmit debugging commands to and return debugging results from software undergoing test on the second computer. The latter arrangement will be generally referred to as "remote" debugging.

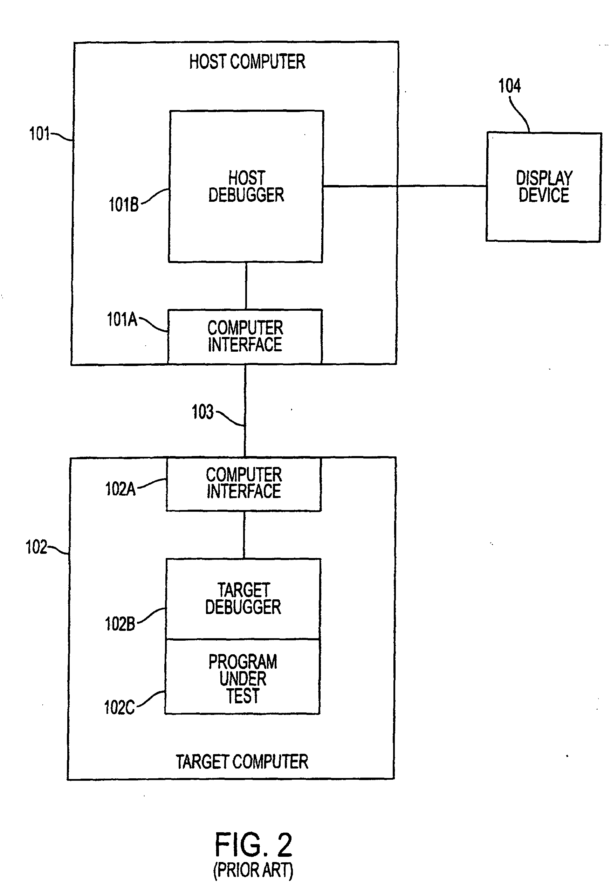

As shown in FIG. 2, for example, a host computer 101 is connected to a target computer 102 over a hardware link 103 such as a serial interface (e.g., RS-232C) defined by serial ports 101A and 102A on each computer. Program under test 102C is debugged through the use of a target debugger 102B and a host debugger 101B. A programmer can step through instructions in program 102C by issuing commands to host debugger 101B, which in turn transmits the commands to target debugger 102B for execution within program under test 102C. Debug results (e.g., the values of variables or memory locations) are returned to host debugger 101B and displayed on a display device 104. The program may comprise an application program or an operating system, for example.

In the architecture of FIG. 2, target debugger 102B typically "pushes" data to host debugger 101B, thus using processor time on target computer 102 and causing side effects that would not normally be observed absent the debugger. As computers are being equipped with more sophisticated hardware interfaces, conventional serial ports such as 101A and 102A are being phased out and being replaced with more sophisticated interfaces, such as the Universal Serial Bus (USB) and the IEEE 1394 bus. Conventional remote debuggers have not been adapted to these new technologies, which offer significantly faster access speeds and more features (e.g., isochronous and asynchronous transfer capabilities).

The architecture of FIG. 2 typically allows a programmer to debug only a single target computer at one time, since host computer 101 is connected to target computer 102 through a dedicated hardware port and hardware resources 103 that is not shared by other target computers. If it is desired to debug multiple target machines simultaneously, a separate dedicated hardware port must be provided to each target computer, thus complicating the debugging process.

Conventional remote debugging schemes are character-based, which is generally less efficient than packet-based schemes. Use of such character-based schemes on packet-based buses such as the IEEE 1394 would not take advantage of substantially higher bandwidths available on the latter types of buses.

A conventional debug interface for remote debugging is known from US 5 978 902.

### SUMMARY OF THE INVENTION

The invention is defined by the subject matters of the independent claims.

Preferred embodiments are defined by the dependent claims.

The present invention provides a means of debugging software remotely over a packet-based serial bus between a host computer and a target computer. A host debugger on the host computer communicates with a kernel debugger on the target computer using a serial bus such as the IEEE 1394 bus. Memory addresses in the target computer are mapped to a physical address space of the serial bus, and a kernel debugger in the target computer polls the memory mapped area to determine whether the host debugger has requested a debugging function.

When the kernel debugger determines that the host computer has requested a certain debugging function, the kernel debugger stores a response into the memory-mapped area for the host debugger to retrieve. If the host debugger requests the contents of certain memory locations in the target computer, the kernel debugger stores a pointer to the memory locations, and the host debugger directly retrieves the contents of the memory locations over the serial bus without further intervention by the target machine and without interrupting the target CPU. A plurality of target machines (eg., up to 62) can be debugged using a single cable at bus speeds of 400 megabits per second, which is much faster than can be achieved conventionally.

### BRIEF DESCRIPTION OF THE DRAWINGS

FIG. 1 is a schematic block diagram of a conventional general-purpose digital computing environment that can be used to implement various aspects of the present invention.
FIG. 2 is a schematic block diagram of a system employing conventional techniques for remotely debugging a program 102C on a target computer 102.
FIG. 3 is a schematic block diagram of a system and method employing various inventive principles, in which software executing on a plurality of target machines is debugged using a host debugger that communicates over a serial bus using memory mapped addresses in each target machine.
FIG. 4 shows steps of a method that can be used to carry out remote debugging between a host computer and a target computer.
FIG. 5 shows how a shared memory area 501 on a target computer can be mapped to addresses in a serial bus address space 502.
FIG. 6 shows an exemplary protocol stack for interfacing a serial bus to higher level software layers in each computer.

### DETAILED DESCRIPTION OF THE INVENTION

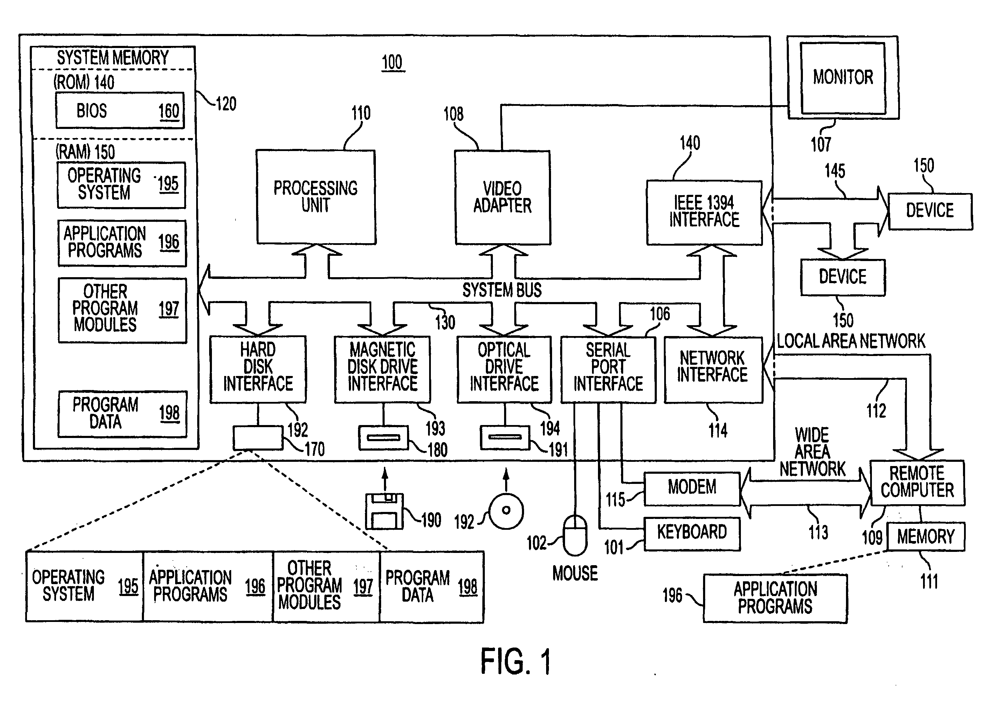

FIG. 1 is a schematic diagram of a conventional general-purpose digital-computing environment that can be used to implement various aspects of the present invention. A computer 100 includes a processing unit 110, a system memory 120 and a system bus 130 that couples various system components including the system memory to the processing unit 110. The system bus 130 may be any of several types of bus structures including a memory bus or memory controller, a peripheral bus, and a local bus using any of a variety of bus architectures. The system memory 120 includes a read only memory (ROM) 140 and a random access memory (RAM) 150.

A basic input/output system (BIOS) 160 containing the basic routines that help to transfer information between elements within the computer 100, such as during start-up, is stored in ROM 140. Computer 100 also includes a hard disk drive 170 for reading from and writing to a hard disk (not shown), a magnetic disk drive 180 for reading from or writing to a removable magnetic disk 190; and an optical disk drive 191 for reading from or writing to a removable optical disk 192, such as a CD ROM or other optical media. Hard disk drive 170, magnetic disk drive 180, and optical disk drive 191 are respectively connected to the system bus 130 by a hard disk drive interface 192, a magnetic disk drive interface 193, and an optical disk drive interface 194. The drives and their associated computer-readable media provide nonvolatile storage of computer readable instructions, data structures, program modules and other data for the computer 100. It will be appreciated by those skilled in the art that other types of computer readable media which can store data that is accessible by a computer, such as magnetic cassettes, flash memory cards, digital video disks, Bernoulli cartridges, random access memories (RAMs), read only memories (ROMs), and the like, may also be used in the exemplary operating environment.

A number of program modules can be stored on the hard disk, magnetic disk 190, optical disk 192, ROM 140 or RAM 150, including an operating system 195, one or more application programs 196, other program modules 197, and program data 198. In particular, the RAM 150 will, from time to time, store various device drivers, as known in the art. A user can enter commands and information into computer 100 through input or selection devices, such as a keyboard 101 and a pointing device 102. The pointing device 102 may comprise a mouse, touch pad, touch screen, voice control and activation or other similar devices. Other input devices (not shown) may include a microphone, joystick, game pad, satellite dish, scanner, or the like. These and other input devices are often connected to the processing unit 110 through a serial port interface 106 that is coupled to the system bus, but may be connected by other interfaces, such as a parallel port, a game port or a universal serial bus (USB). A monitor 107 or other type of display device is also connected to system bus 130 via an interface, such as a video adapter 108. In addition to the monitor, personal computers typically include other peripheral output devices (not shown), such as speakers and printers.

An IEEE 1394 interface 140 may also be provided. The IEEE 1394 interface 140 couples an IEEE 1394-compliant serial bus 145 to the system bus 130 or similar communication bus. The IEEE 1394-compliant serial bus 145, as known in the art, allows multiple devices 150 to communicate with the computer 100 and each other using high-speed serial channels. The IEEE 1394 serial bus standard is based largely upon the internationally adopted ISO/IEC 13213 (ANSI/IEEE 1212) CSR Architecture Specification and the IEEE 1394-1995 Serial Bus Specification, the teachings ofwhich are herein incorporated by reference. Additional buses such as the PCI bus can be provided in computer 100 and interfaced to the IEEE 1394 and other buses.

A typical serial bus having an IEEE 1394 standard architecture is comprised of a multiplicity of nodes that are interconnected via point-to-point links, such as cables, that each connect a single node of the serial bus to another node of the serial bus. The nodes themselves are addressable entities that can be independently reset and identified. Nodes are logical entities, each with a unique address. Each node provides a so-called configuration ROM (read-only memory}--hereinafter referred to as configuration memory-and a standardized set of control registers that can be accessed by software residing within the computer system.

The computer 100 can operate in a networked environment using logical connections to one or more remote computers, such as a remote computer 109. The remote computer 109 typically includes at least some of the elements described above relative to the computer 100, although only a memory storage device 111 has been illustrated in FIG. 1. The logical connections depicted in FIG. 1 include a local area network (LAN) 112 and a wide area network (WAN) 113. Such networking environments are commonplace in offices, enterprise-wide computer networks, intranets and the Internet.

When used in a LAN networking environment, the computer 100 is connected to local network 112 through a network interface or adapter 114. When used in a WAN networking environment, the computer 100 and remote computer 109 may both include a modem 115 or other means for establishing a communications over wide area network 113, such as the Internet. The modem 115, which may be internal or external, is connected to system bus 130 via the serial port interface 106. In a networked environment, program modules depicted relative to the computer 100, or portions thereof, may be stored in the remote memory storage device.

It will be appreciated that the network connections shown are exemplary and other means of establishing a communications link between the computers can be used. The existence of any of various well-known protocols, such as TCP/IP, "ETHERNET", FTP, HTTP and the like, is presumed, and the system can be operated in a client-server configuration to permit a user to retrieve web pages from a web-based server. Procedures of the present invention to be described below can operate within the environment of the computer 100 shown in FIG. 1. Although the invention is generally applicable to a computer operating in accordance with the IEEE 1394 standard, it is not intended to be so limited.

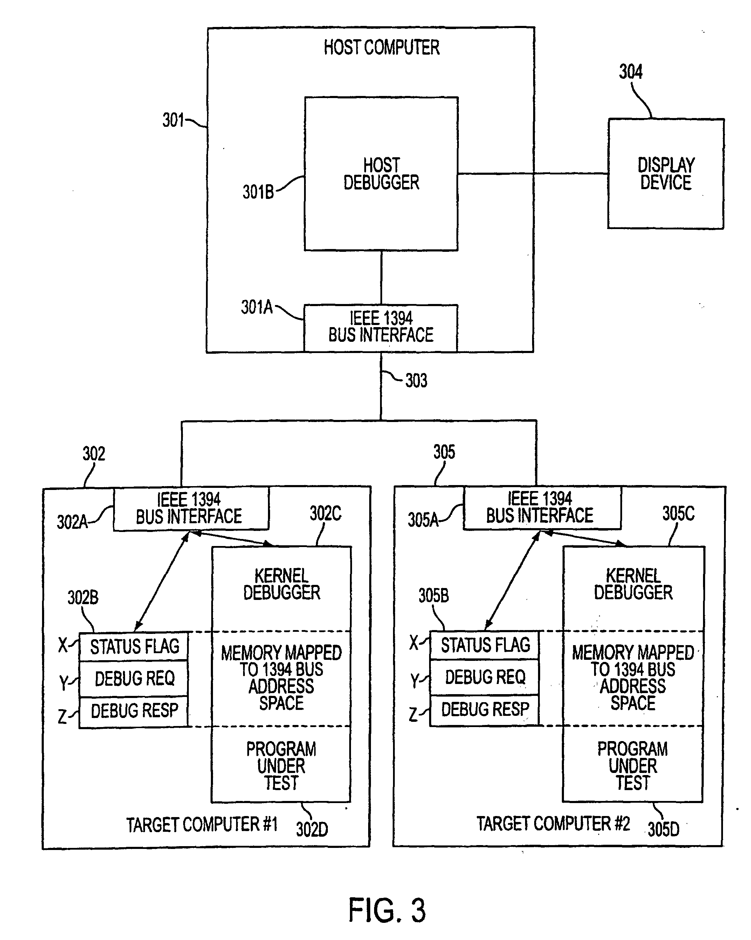

FIG. 3 shows an exemplary system of devices communicating via a serial bus in accordance with various inventive principles. As shown in FIG. 3, a host computer 301 is coupled to one or more target computers 302 and 305 through a serial bus 303. As explained above, serial bus 303 may comprise a bus adhering to the IEEE 1394 standard. Such a bus includes a first differential signal pair for conducting a first signal, a second differential signal pair for conducting a second signal, and a pair of power lines. Collectively, the interconnections 303 constitute the cabling of the serial bus and a plurality of nodes (computers or other devices) implement the functionality of the serial bus. Each node on the bus can include one or more ports, although in FIG. 3 it is assumed that only one port per node (computer) is shown.

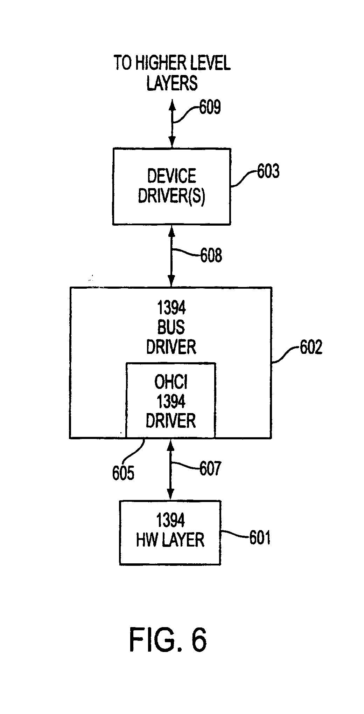

Each target computer 302 and 305 and host computer 301 includes an interface card (elements 301 A, 302A, and 305A) that allows each computer to transmit and receive commands and data on serial bus 303, such as the IEEE 1394 serial bus. In one embodiment, such cards may comprise commercially available interface cards that are internally compatible with the well-known PCI bus used by many personal computers. The interface cards are manipulated through the use of software drivers as shown, for example, in FIG. 6.

Referring briefly to FIG. 6, an exemplary protocol stack is shown for interfacing the bus to higher level software layers in each computer. The protocol stackcomprises an IEEE 1394-compliant hardware layer 601, an IEEE 1394-compliant bus driver 602 and one or more device drivers 603. Particular implementations of the hardware layer 601 are well known in the art and typically depend upon the particular device being implemented. Device drivers 603 comprise computer instructions that control bus functions such as a bus reset, transmission and reception of information on the bus, reading from and writing into memory locations of nodes on the bus, and allocation of bus resources (e.g., isochronous channels). Device drivers 603 bridge the protocol gap between the IEEE 1394 protocol and whatever protocol is adhered to by its corresponding device.

Bus driver 602 manages communications between the physical bus and higher-level protocol layers. In one embodiment, the 1394-compliant bus driver comprises an Open Host Controller Interface (OHCI) driver 605 implementation of the IEEE 1394 link layer protocol. The OHCI is described in the 1394 Open Host Controller Interface Specification. This interface can transmit and receive all defined 1394 packet formats using Direct Memory Access (DMA) to write the packets into the host computer's memory. Also depicted in FIG. 6 are various interfaces 607-609 between the protocol layers 601-603. The interfaces 607-609 define the types ofdata that may be exchanged between layers as well as the sequence of exchanges.

Returning now to FIG. 3, remote debugging over a serial bus will be explained in accordance with various inventive principles. The following explanation assumes that a computer program under test 302D on a single target computer 302 is to be debugged. Following the single-target case, further details of a multi-target debugging environment are explained.

As shown in FIG. 3, host debugger 301 B communicates with a kernel debugger 302C residing on target computer 302 in order to debug program under test 302D. The kernel debugger is, as its name implies, preferably included as part of the kernel operating system executing on target computer 302 and can be enabled by a software switch or other mechanism when the target machine is booted. A shared memory area 302B is mapped to a physical address space in the serial bus memory space (e.g., a 48-bit address space), thus allowing host computer 301 to directly write data into memory within target computer 302. The 1394 OHCI can be programmed to accept 1394 read and write transactions as reads and writes to host memory space. In this mode, the 1394 OHCI acts as a bus bridge from the 1394 bus into host computer memory. Where multiple target machines are used, separate 48-bit address spaces are used, since a physical node identifier further specifies which of a plurality of nodes on the bus is referenced by the appended 48-bit address.

In one embodiment, shared memory area 302B includes a status flag X, a request buffer area Y, and a request acknowledgement area Z. The size of these areas and the specific flags or variables used can vary depending on implementation.

The initial memory mapping can be done using initialization code in the kernel debugger. For example, a small array o f characters can be allocated as part of a Hardware Abstraction Layer (HAL) Dynamically Linked Library (HAL.DLL) image. When the kernel starts, it makes a call to the HAL debugger initialization function, which then maps the static memory buffer (loaded as part of the HAL.DLL image) to a physical address using MmGetPhysicalAddress. Once the physical address is determined (it could be anywhere, since the HAL.DLL image could be loaded anywhere in memory), then the target debugger announces it using isochronous header-only packets. The mapping to the 1394 address space can be done by the 1394 OHCI host controller, which maps the computer's physical addresses 0-xxx to 1394 addresses 0-xxx, where xxx is the top of physical memory. So once the physical address is known, the 1394 address is also known.

When host debugger 301B needs to access a memory location on target computer 302 (e.g., the contents of a variable in program under test 302D), it writes a debug request into shared memory request area Y by transmitting a command over the serial bus to write into that area. As explained in more detail below, host computer 301 can determine the address of area Y by extracting it from an "announce" packet that is periodically transmitted by kernel debugger 302C. Kernel debugger 302C periodically checks request area Y and, when it detects that a request has been stored by host debugger 301B, retrieves the debug request, processes the request, stores the results of the debug operation into request acknowledgment area Z, and sets the status flag X to "success." Thereafter, host debugger 301B detects that the success flag has been set and reads the debug results directly over the serial bus from the memory mapped area 302B.

In one type of debugging operation, kernel debugger 302C can store into request acknowledgment area Z the starting memory address of an array that is the subject of a debug request. Thereafter, host debugger 301B can directly read the contents of successive memory locations in the array over the bus 303 without further intervention by or participation of target debugger 302C. If only a single data value is needed, kernel debugger 302C can instead store the data value (rather than an address) into request acknowledgment area Z, thus saving a read operation (i.e., the host debugger could directly read the value rather than reading the address of the value). Both approaches are possible in accordance with variations of the invention. Some debug operations (e.g., "step to next instruction" or the like) may not require reading data from the shared data area, other than confirming that the "success" flag was set.

In certain embodiments, state manipulations of the kernel debugger machine are done by parsing commands that are sent by the remote debugger. The list of commands can vary depending on implementation, and can be independent of the 1394 implementation. All 1394-specific details can be hidden below a certain abstraction level so that pre-existing kernel and host debugger code could be used as is. Various commands such as single step, reading and writing of I/O registers, start normal execution, break (pause execution), and others can be included, as is conventional.

When debugging is enabled, physical access filters (a 1394 OHCI-specific function) are enabled on the target machine in order to allow other nodes to read the memory of the target machine. This can be effected by setting a register (the PhysicalRequestFilter register) on the target computer's 1394 OHCI bus interface card to indicate that other bus nodes (e.g., the host computer) are permitted to directly read memory locations on the target machine that are mapped within the 1394 bus's 48-bit address space. To communicate debug requests to the target system, the host debugger can send asynchronous write block requests to the memory at the Physical Address Offset (a 1394 convention) described in the announce packet. Further details of the writing and mapping steps are described below.

Because kernel debugger 302C has little or no participation in moving data from program under test 302D (or any other memory space in target computer 302), there is little or no impact on the operating system of target computer 302. No interrupts on the target computer are required to service the debugging request and, in contrast to conventional debugging techniques, no actual debugging data needs to be sent by the target. Instead, the target preferably sends small packets that contain the physical memory addresses were the data lies and the host machine fetches them. As discussed in more detail below, one embodiment of the invention relies on the use of a dedicated isochronous data channel that is allocated in advance for communication between host computer 301 and target computer 302.

The general case of debugging a program on a single target machine can be expanded to an embodiment in which two or more target machines are debugged from a single host computer. As shown in FIG. 3, for example, each of a plurality of target machines 302 and 305 includes a separate kernel debugger and shared memory area, and communicates with host debugger 301B over a separate pre-allocated channel (e.g., an isochronous data channel that is fixed by agreement or selected before debugging begins). In this manner, host debugger 301B can simultaneously monitor and debug multiple computer programs over a single cable, thus greatly simplifying the debugging operation.

According to one variation of the invention, the kernel debugger periodically transmits an "announce" packet on a predetermined isochronous channel on the serial bus, which is detected by the host debugger and used to establish communication between the two computers. The "announce" packets indicate the physical address of the shared memory area, so that the host debugger can write debug requests and retrieve debug results to and from that area on the target computer. By using isochronous channels for communication, neither the host computer nor the target computer needs to be aware of the other's bus address, thus allowing communication to begin even without "enumeration" by the two computers

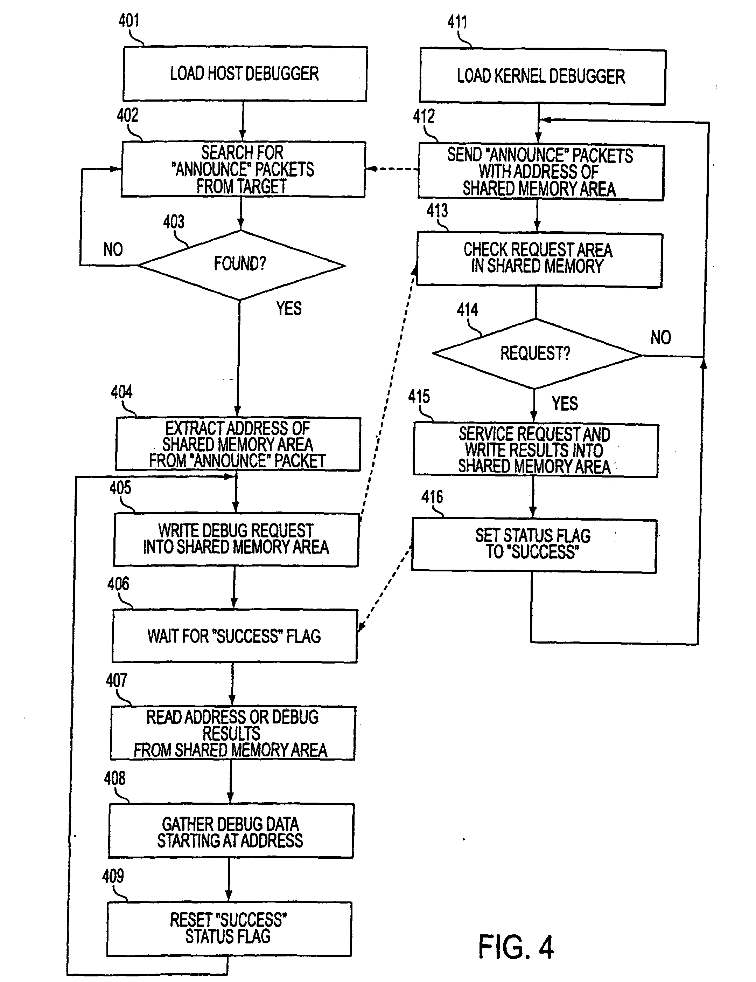

Reference will now be made to FIG. 4, which shows steps of a method that can be used to perform remote debugging between a host computer and a target computer. It is assumed that the host computer and the target computer are booted at different times, such that the order in which they are booted will not be known in advance. Steps executed in the host debugger (e.g., element 301 B of FIG. 3) are shown in the left half of FIG. 4, while steps executed in the kernel debugger (e.g., element 302C of FIG. 3) are shown in the right half of FIG. 4.

Beginning in step 401, the host debugger is loaded on the host computer. (It will be appreciated that the kernel debugger on the target computer could instead be loaded first, in step 411). In step 402, the host debugger listens for "announce" packets from the kernel debugger executing on the target computer. If the kernel debugger has not yet been loaded, the host debugger will continue waiting until the kernel debugger is eventually started and begins to transmit "announce" packets. If the kernel debugger was loaded first, then its periodic "announce" packets will eventually be detected by the host debugger after it is loaded.

The "announce" packets can be sent once per second or at another convenient interval, the details of which are not critical to the invention. The isochronous channel on which the kernel debugger transmits the "announce" packets can be pre-established in a configuration file at system boot-up time, such that multiple target machines use different isochronous channels for transmission. Alternatively, the specific channel can be selected manually (e.g., using a command switch) or automatically using an allocation scheme.

Turning to the right side of FIG. 4, it is assumed that the kernel debugger is loaded in step 411 and begins broadcasting "announce" packets in step 412. According to one embodiment of the invention, each "announce" packet includes the physical address of the shared memory area in the target computer to which addresses in the IEEE 1394 address space have been mapped.

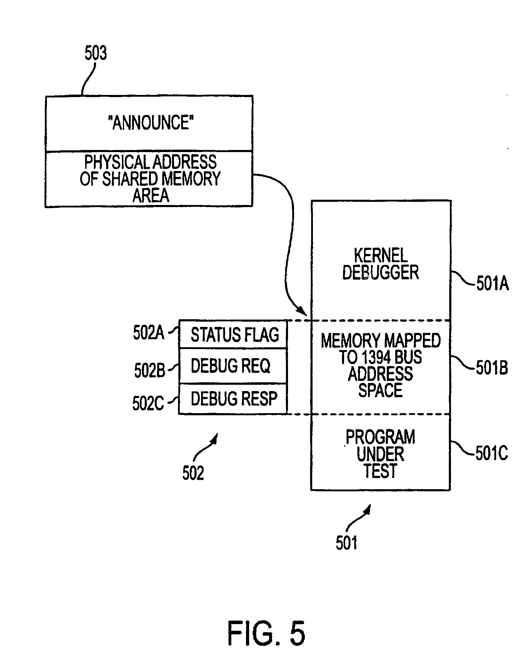

As shown in FIG. 5, for example, the target computer's physical address space 501 includes a first area 501A in which the kernel debugger resides; a memory mapped area 501B that shares physical addresses with certain addresses 502 in the serial bus address space; and a program under test 501C. The memory mapped area 501 B is allocated by the kernel debugger upon initialization, and the physical address of the area is determined by the kernel debugger after it is loaded and inserted into the "announce" packets so that the host debugger knows where to read and write debug values. In other words, the starting address of the memory mapped region 501B, which is mapped to corresponding locations 502 in the bus address space, is inserted into "announce" packets 503 in order to inform the host debugger where the shared memory area is located.

It may be possible to locate the shared memory area in a fixed, predetermined location by convention. Alternatively, in various embodiments, the aforementioned scheme is used because different operating system configurations may load the kernel components at different offsets. Consequently, being able to move the shared memory area around is more robust and incurs fewer dependencies.

Returning to FIG. 4, the "announce" packets sent by the kernel debugger are eventually detected by the host debugger in step 403. In one embodiment, the primary means of communication between the target and the host is isochronous channel broadcasts. Some serial buses, including the IEEE 1394, support isochronous data channels (each mapped to a "context") to permit time-bounded packet communication over the serial bus. Within the packet header of each IEEE 1394 isochronous packet is a 6-bit channel number. Receivers "listen" for packets transmitted on a particular channel number. Isochronous stream packets can be transmitted on a channel for which bandwidth has been allocated; only one "talker" at a time is permitted to transmit during an isochronous cycle.

According to one aspect of the invention, multiple independent DMA isochronous contexts are present on the 1394 controller on both the target and host machine. The target computer's OHCI 1394 driver can reserve context "0" so it will not be used for other purposes. The target OHCI 1394.sys driver is told not to use the context by reading a registry value

In step 404, the host debugger extracts the physical address of the shared memory area from the "announce" packet and retains it for further debug operations. In step 405, assuming that a programmer has issued a debug command such as a command to dump the contents of various memory locations on the target computer, the host debugger writes the debug request into the shared memory area 501B of the target computer (more specifically, a request buffer area 502B on the serial bus that is memory mapped to the target computer's memory). Moving to the right side of FIG. 4, the kernel debugger detects this debug request in step 413 by periodically polling that memory address (step 414) and, when the request is detected, services the request in step 415.

The debug request could comprise various types of debug operations, such as stepping to the next instruction in the program under test; retrieving the value of a register or memory address; or dumping the contents of an array, for example. If the debug operation requests data from the target computer, the kernel debugger can service the request by storing the requested data value into the request acknowledgement buffer 502C (see FIG. 5), which makes the data value available to the host debugger by virtue of being stored in the shared memory area. Alternatively, some debug operations may not require retrieval of a data value.

To dump the contents of a data array, the kernel debugger can store into the request acknowledgment buffer 502C the physical address at which the array starts, and the host debugger can perform direct memory reads over the serial bus starting at that location, thus avoiding intervention (and processing overhead) by the kernel debugger.

After the kernel debugger services the request, then in step 416 it sets the status flag 502A to "success," which is detected in step 406 by the host debugger. (The host debugger can periodically poll that shared memory location to wait for the presence of the "success" flag). Then, in step 407, the host debugger retrieves the debug value (if any) from the request acknowledgment buffer area 502C (FIG. 5) and, if the value represents an address, uses it to retrieve data values beginning at that address directly over the serial bus in step 408. Finally, in step 409 the host debugger resets the status flag and returns to step 405.

The following explains in more detail how the kernel debugger on the target machine can be initialized and configured assuming that an IEEE-1394 serial bus is used as the communication medium with an internal PCI bus in conjunction with an exemplary operating system that is commercially available from Microsoft Corporation. Other techniques can be used for different operating systems and bus structures.

The following BOOT.INI options can be provided to enable high-speed serial bus debugging on the target computer:
/DEBUGBUS =<bus name> - Defines debug bus (1394, USB, etc)
/CHANNEL=xx - Defines 1394 broadcast channel to use
/BUSPARAMS=<busNumber>.<devicet>.<function>@<BAR> - (optional)
Defines PCI addressing info and BAR to program the controller with.

The most challenging part is identifying and configuring to get the bus host controller and boot timed. This must be done at Phase0 initialization, thus limiting the available application programming interfaces (APIs) from the Hardware Abstraction Layer (HAL) library, which is a large set of routines loaded as one library and specific to certain system hardware configurations. There are two methods suggested:
1. Run a debugger application, when the operating system has booted, which allows the user to specify the desired bus host controller. Then using PnP APIs get the PCI bus Number, Slot Number, Function and BAR for that device and add them to the BOOT.INI Options line.
2. If the application is not run but the Options Line indicates /DEBUG /DEBUGBUS=1394, then traverse the PCI buses in the system at initialization time, looking for the generic Class Code for OHCI 1394 host controllers. This can coded so any other buses can use the same enumeration functions. Exported HAL functions HalGetBusDataByOffset and HalSetBusDataByOffset can be used.

Once at least one 1394 controller is found, the kernel debugger code will retrieve the Base Address Registers and use them to initialize the host controller. Some form of communication is required between the kernel 1394 debugger and the WDM stack so power management and PnP can be coordinated once the operating system loads. One proposed kernel exported routine is defined below:

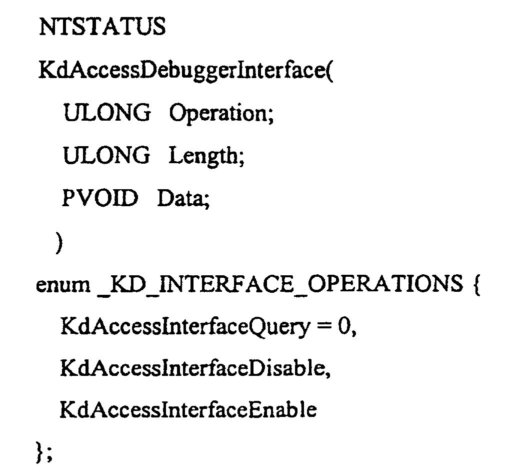

The following steps describe the target debugger initialization protocol:
1. Initialize the host controller, initialize 1 TX isochronous DMA context. The first TX DMA context is used.
2. Enable all bits in the Physical Access Filter register (target systems with debugging enabled are not secure).
3. Initialize the memory segment exposed through physical DMA to the bus. Initialize the Debugger Physical Access area.
4. Force root so that the target debugger becomes the root node of the 1394 bus. This is done to ensure cycle start packets are sent on the bus, thus allowing isochronous communications. If forcing root fails after a certain number of retries, the target debugger stops, assuming a capable node is root and cycle master.
5. Start repeated transmissions (on the allocated isochronous channel) the "announce" packet including the address of the Debugger Physical Access area. The packet is sent when KdPollBreakln is called.

When polling occurs, the target debugger runs through a basic test to ensure the 1394 controller is in the correct mode of operation. If not, it dynamically reprograms the necessary registers to allow the target to receive and broadcast packets.

The host machine can use i386kd.exe and a virtual host debugger driver (1394vdbg.sys) to get access to the 1394 bus and communicate with the target machine. The virtual driver should be running before i386kd.exe can debug. The host debugger can use virtual device support from the 1394 bus driver to load a virtual device driver that allows access to the 1394 bus. The virtual device API can be used to make the host debugger independent ofPnP enumeration of target computers and shield it from bus PnP events. It also allows the host debugger to access any node on the bus, essentially providing a pass through mode directly to the link layer.

There are two ways to load the debugger virtual device driver:
1. Add a registry entry under
   [HKEY_LOCAL_MACHINE\SYSTEM\CurrentControlSet\Control\Class\ {6BDD 1 F C1-810F-11D0-BEC7-08002BE2092F}\0000\Virtual Device List]; or
2. Issue an IOCTL_IEEE1394_API_REQUEST to the 1394 bus symbolic link, with Request->RequestNumber = IEEE1394_API_ADD_VIRTUAL_DEVICE.

The following steps describe one approach for the virtual host debugger driver:
1. Create a Device Object and a symbolic link for each 1394 channel. This is referred to as the Channel Device.
2. When a IRP_MJ_CREATE is done on the Channel Device, allocate the isochronous channel and required bandwidth for fixed length packets, using 1394 BUS DDIs.
3. Flag the device as being in the LOOKING_FOR_DEBUGGER_MODE.
4. Allocate bus resources using the REQUEST_ALLOCATE_RESOURCES DDI.. The listen mode is packet-based circular DMA with no headers.
5. Attach N descriptors to the resource and start listening. Initially, listen only for empty headers that announce the debugger presence.
6. If a debugger packet is received, copy and store header information used to communicate to the debugger. Clear LOOKING_FOR_DEBUGGER_MODE flag and enter data reception mode. At this point the host debugger is ready to receive read or write IRPs from the debugger application.

Once the i386kd has opened the Channel Device symbolic link and retrieved a handle, operation is the same as using the serial port: WriteFile/ReadFile APIs can be used to send/receive data from the 1394 bus.

The target debugger can use the following isochronous packet header to announce its presence:

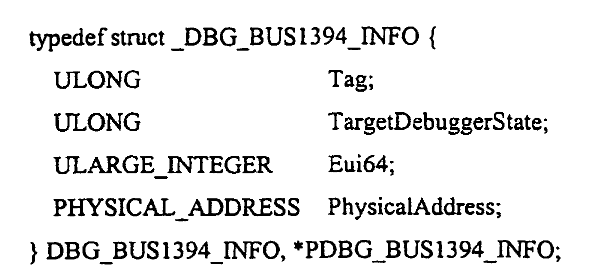

This header can be sent approximately every 1 second, as long as the target debugger is active, and encapsulated within a 1394 isochronous packet with the Tag field set to 0. This allows the host to filter out all Tag0 packets after it discovers the debugger and it only listens for data packets. This header can also be used in data packets.

In certain embodiments, no data is actually sent by the target debugger. Instead, the target debugger merely sends a scatter-gather list of the data address indicating the location of the data in the target computer's physical memory. The following packet format can be used to communicate the location of the data:

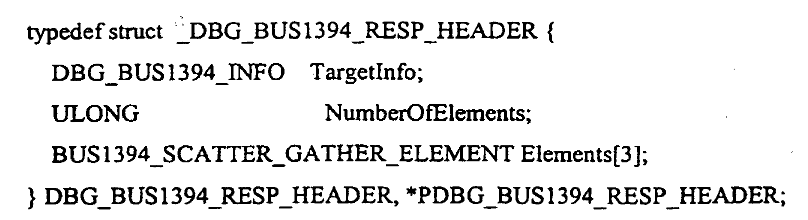

The above packet is specified with only 3 scatter -gather elements to accommodate the existing NT debugging protocol, which defines three parts to a kernel debugger packet:
1. Packet Header - Fixed length packet info and CRC
2. Message Header - Variable Length
3. Message Data (optional) - Variable Length

Using the format above, bandwidth use is minimized on the bus since for any data transfer, the target sends only 80 bytes. Data packets preferably use Tag = 2 to differentiate them from header only "announce" packets and allow the host computer to filter each packet type.

After a bus reset, the target debugger's Node ID might change. When this happens, the host computer will not be able to communicate with the target unless it retrieves the new Node ID of the target. Note that traditional 1394 enumeration does not apply here. One cannot assume that the target's Configuration ROM can be read to retrieve the GUID. Instead, the target changes the tag on the announce packets from 0 to 2 thus getting around the filtering in the host. This achieves the following:
1. No need for lengthy enumeration that is not always guaranteed to work
2. No need for host machine to stop data reception mode and start listening for announce packets
3. Automatic discovery of new target id.

After 3 seconds, the target switches the tag back to 0 so filtering is no longer bypassed. The host machine sets a timer after a bus reset is detected and if the target is not detected within 3 seconds then it will be forced to exit data reception mode and enter the LOOKING_ FOR_TARGET mode.

For communicating requests to the target system, the host debugger sends asynchronous write block requests to the memory at the Physical Address Offset described in the announce packet, which points to the Shared Physical Area in the target's memory. The memory segment (that was part of the debuggers image) is mapped using MmGetPhysicalAddress. The address range can use the following physical layout:

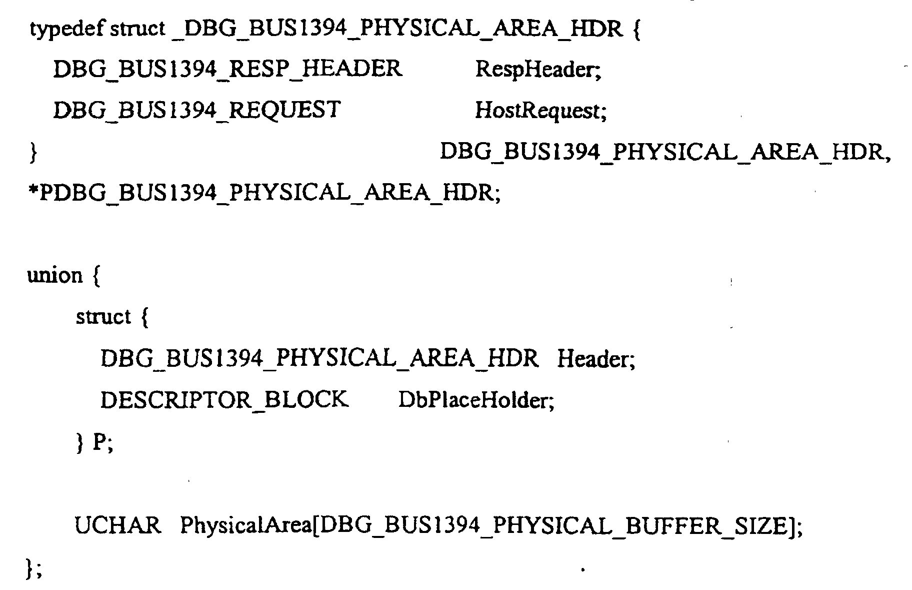

The data structure below defines one packet format that can be used by the host debugger when writing to the HostRequest memory space:

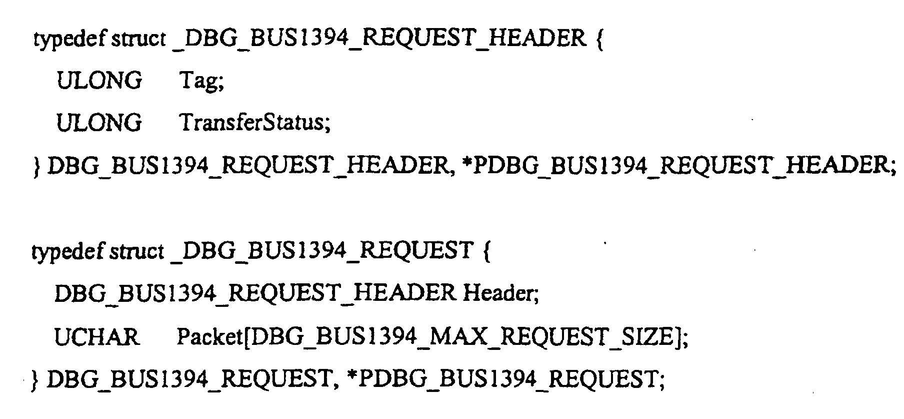

### TARGET KERNEL FUNCTIONS

The following kernel and HAL functions can be used to support PCI -based and specifically 1394 debugging:

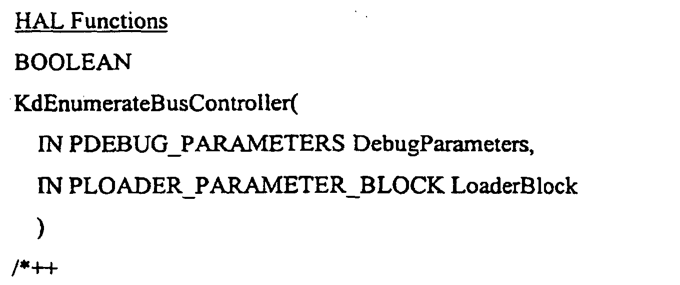

### Routine Description:

This routine enumerates the bus controller of DebugParameters.BusType, using the appropriate ClassCode (generic enumeration). IfPCI addressing info was found on the Options String passed by the Loader, will use this and go directly to that bus number, slot, function to setup that controller.

### Arguments:

DebugParameters - Supplies Debug parameters parsed from Options string

LoaderBlock - Supplies a pointer to the LOADER_PARAMETER_BLOCK passed in from the operating system loader.

### Return Value:

None.

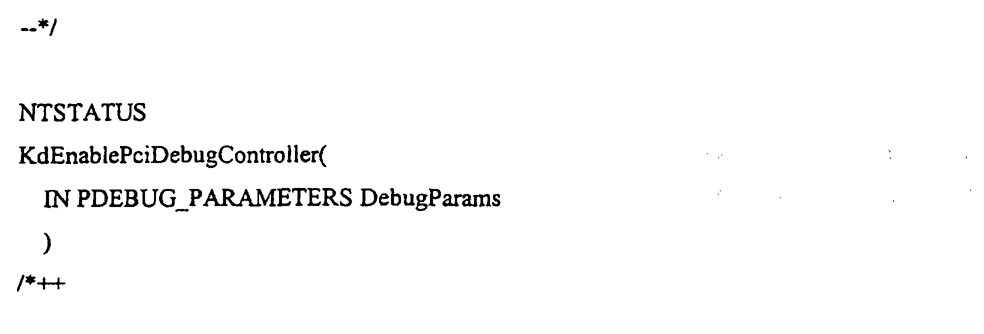

### Routine Description:

This routine uses the PCI addressing info to configure the PCI configuration space and using HAL apis enable the host controller used for debugging

### Arguments:

DebugParameters - Supplies Debug parameters parsed from Options string.

### Return Value:

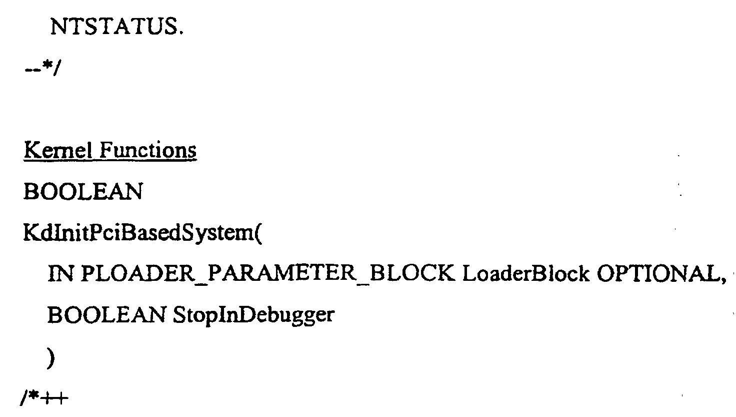

### Routine Description:

This routine initializes the portable kernel debugger for anything other than the serial port.

### Arguments:

LoaderBlock - Supplies a pointer to the LOADER_PARAMETER_BLOCK passed in from the operating system loader.

StopInDebugger - Supplies a boolean value that determines whether a debug message and breakpoint are generated.

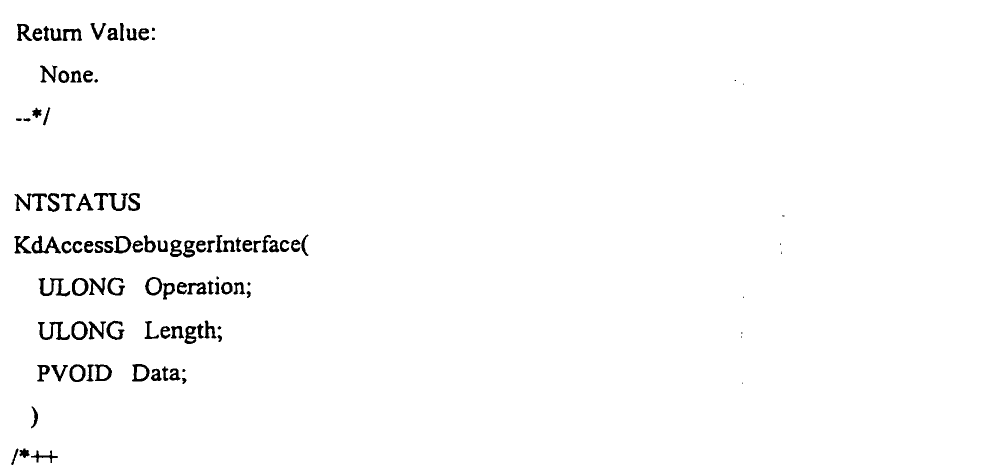

### Routine Description:

This function is called to access the debugger and disable/enable/query the proper PCI bus controller.

### Arguments:

Operation - Operation to perform. It can be Enable, Disable or Query

Length - Size in bytes of data buffer supplied. Modfied to true length required.

Data - Data buffer to return Query information (DEBUG_PARAMETERS struct)

### Return Value:

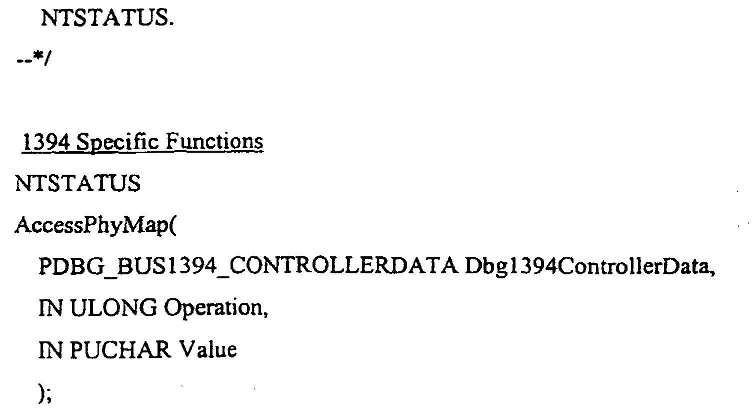

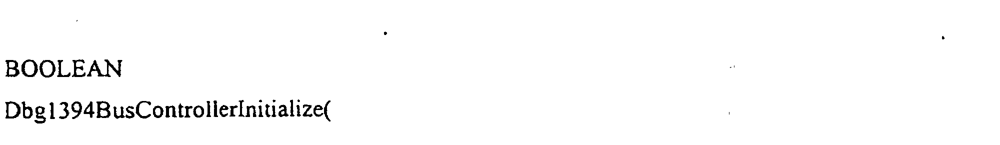

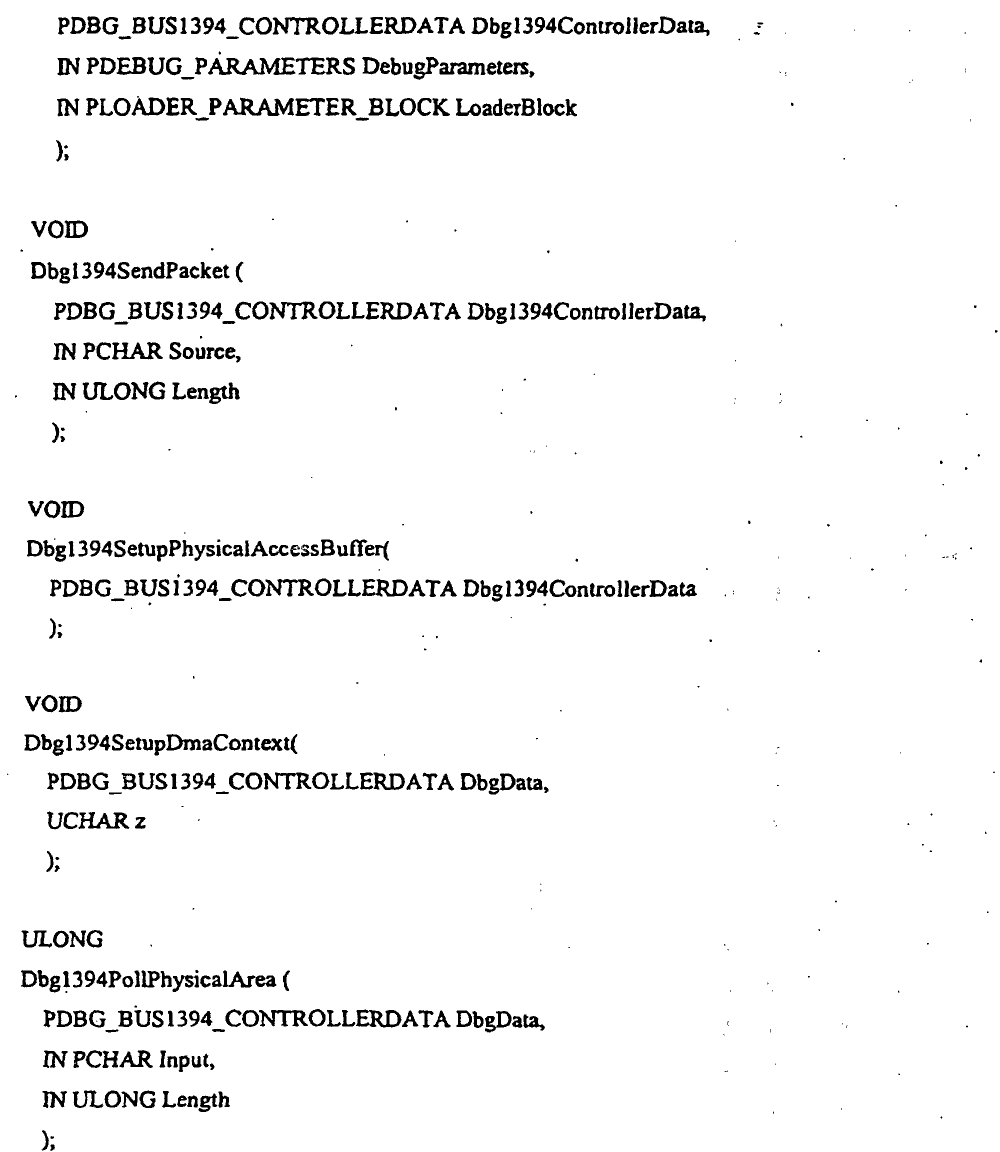

What has been described above is merely illustrative of the application of the principles of the present invention. Other arrangements and methods can be implemented by those skilled in the art without departing from the scope of the present invention. Any of the methods of the invention can be implemented in software that can be stored on computer disks or other computer-readable media for execution in a host or target computer. While an electrical medium has been described as the communications channel, the principles can also be applied using RF, fiber optic, or other media. No claim should be interpreted to be in means plus function format. Numbered steps in method claims should not be interpreted to require a particular ordering of the steps.

## Claims

1. A method of remotely debugging a computer program on a target computer (302;305) in a system comprising a host computer (301) and the target computer coupled through a communication medium (303) that supports a shared address space with the target computer, the method comprising the steps of:
(1) allocating a shared memory area (302B,305B) the target computer and mapping the shared memory area to an address space of the communication medium;
(2) from the host computer, storing a debug request into the shared memory area on the target computer, and
(3) in the target computer, retrieving the debug request from the shared memory area and servicing the debug request

2. The method of claim 1, wherein steps (1) through (3) are implemented using an IEEE-1394 compliant serial bus as the communication medium.

3. The method of claim 1, further comprising the steps of:
(4) in the target computer, setting a flag in the shared memory area indicating that the debug request has been serviced; and
(5) in the host computer, detecting that the flag has been set and, in response thereto, retrieving one or more data values from the target computer.

4. The method of claim 3, wherein step (5) is performed using a bus read command that requests one or more data values from within a physical address space that is shared by the target computer and the communication medium.

5. The method of claim 1, wherein step (3) is performed in a kernel mode debugger on the target computer.

6. The method of claim 5, wherein step (3) is performed without generating any interrupts on the target computer.

7. The method of claim 5, further comprising the step of setting a physical filter register on the target computer that permits the host computer to directly read data from memory locations in the target computer.

8. The method of claim 1, further comprising the steps of:
transmitting from the target computer an "announce" packet containing an address of the shared memory area, and
in the host computer, using the address of the shared memory area from the "announce" packet to determine a storage location for the debug request stored in step (2).

9. The method of claim 8, wherein the step of transmitting the "announce" packet uses an isochronous data channel on the communication medium.

10. The method of claim 1, further comprising the step of repeating steps (1) through (3) for a plurality of target machines that share the communication medium.

11. The method of claim 10, further comprising the step of using a separate isochronous data channel on the communication medium to communicate with each of the plurality of target machines.

12. The method of claim 1, wherein steps (1) through (3) are performed using as the communication medium a packet-based serial bus that supports isochronous data channels.

13. A system for remotely debugging a computer program, comprising in combination:
a target computed (302;305) on which the computer program is to be debugged;
a host computer (301) on which the debugging will be remotely controlled; and
a communication medium (303) coupled between the target computer and the host computer, **characterised in that**
the target computer comprises a shared memory area (302B;305B) that is mapped to an address space of the communication medium such that addresses within the memory area are directly accessible to the host computer without generating interrupts on the target computer; and
that the host computer stores a debug request into the shared memory area on the target computer and retrieves debugging results by reading a data value from the shared memory area on the target computer.

14. The system of claim 13, wherein the communication medium comprises an IEEE-1394 compliant serial bus.

15. The system of claim 13, wherein the target computer sets a flag in the shared memory area to indicate that the debug request has been serviced, and wherein the host computer detects that the flag has been set and, in response thereto, retrieves one or more data values from the target computer.

16. The system of claim 15, wherein the host computer uses a bus read command that requests one or more data values from within a physical address space that is shared by the target computer and the communication medium.

17. The system of claim 13, wherein the target computer comprises a kernel mode debugger that retrieves and stores data values in the shared memory area on the target computer to service the debug request.

18. The system of claim 17, wherein the kernel mode debugger services the debug request without generating any interrupts on the target computer.

19. The system of claim 17, wherein the target computer sets a physical filter register on the target computer that permits the host computer to directly read data from memory locations in the target computer.

20. The system of claim 13,
wherein the target computer transmits an "announce" packet containing an address of the shared memory area, and
wherein the host computer uses the address of the shared memory area from the "announce" packet to determine a storage location for the debug request.

21. The system of claim 20, wherein the target computer transmits the "announce" packet using an isochronous data channel on the communication medium.

22. The system of claim 13, further comprising a second target computer comprising a second computer program that is to be debugged,
wherein the second target computer is also coupled to the host computer through the communication medium;
wherein the second target computer comprises a second shared memory area that is mapped to the address space of the communication medium such that addresses within the second memory area are directly accessible to the host computer without generating interrupts on the second target computer; and
wherein the host computer stores a second debug request into the second shared memory area on the second target computer and retrieves second debugging results by reading a second data value from the second shared memory area on the second target computer.

23. The system of claim 22,
wherein the first target computer uses a first isochronous data channel on the communication medium to communicate with the host computer, and
wherein the second target computer uses a second isochronous data channel on the communication medium to communicate with the host computer.

24. The system of claim 13, wherein the communication medium comprises a packet-based serial bus that supports isochronous data channels.

25. A computer-readable medium comprising computer instructions that, when executed by a target computer on which a program is being debugged, perform the steps of:
(1) allocating a shared memory area in the target computer and mapping the shared memory area to an address space of a communication medium to which the target computer is coupled;
(2) detecting that a debug request for the program has been stored in the shared memory area on the target computer; and
(3) storing a debug result into the shared memory area on the target computer such that it can be retrieved by another computer over the communication medium without interrupting the target computer's CPU.

26. The computer-readable medium of claim 25, wherein the computer instructions when executed further perform the step of transmitting over the communication medium an "announce" packet indicating the memory location of the shared memory area.

27. The computer-readable medium of claim 26, wherein the computer instructions when executed transmit the "announce" packet over an isochronous data channel of the communication medium.

28. A computer-readable medium comprising computer instructions that, when executed by a host computer from which a computer program executing on a target computer will be remotely debugged, perform the steps of:
(1) detecting a shared memory area in the target computer that is mapped to an address space of a communication medium to which the target computer is coupled;
(2) storing a debug request in the shared memory area in the target computer by issuing a command that directly writes into the shared memory area; and
(3) retrieving debug results from the shared memory area by issuing a command that directly reads one or more data values from the shared memory area.

29. The computer-readable medium of claim 28, wherein the computer instructions when executed detect the shared memory area by extracting an address of the shared memory area from an "announce" packet transmitted by the target computer.

30. The computer-readable medium of claim 29, wherein the computer instructions when executed extract the address of the shared memory area from an "announce" packet that is transmitted over an isochronous data channel of the communication medium.

## Patentansprüche

1. Verfahren für die Fern-Fehlersuche in einem Computerprogramm auf einem Zie!computer (302; 305) in einem System, das einen Host-Computer und den Ziel-Computer umfasst, die über ein Kommunikationsmedium (303) verbunden sind, das einen gemeinsamen Adressraum mit dem Ziel-Computer unterstützt, wobei das Verfahren die folgenden Schritte umfasst:
1) Zuweisen eines gemeinsamen Speicherbereiches (302B, 305B) in dem Ziel-Computer und Abbilden des gemeinsamen Speicherbereiches auf einen Adressraum des Kommunikationsmediums;
2) Speichern einer Fehlersuch-Anforderung von dem Host-Computer in dem gemeinsamen Speicherbereich auf dem Ziel-Computer; und
3) Abrufen der Fehlersuch-Anforderung aus dem gemeinsamen Speicherbereich und Abarbeiten der Fehlersuch-Anforderung in dem Ziel-Computer.

2. Verfahren nach Anspruch 1, wobei die Schritte 1) bis 3) unter Verwendung eines IEEE-1394-kompatiblen seriellen Busses als das Kommunikationsmedium umgesetzt werden.

3. Verfahren nach Anspruch 1, das des Weiteren die folgenden Schritte umfasst:
4) Setzen eines Flag in dem gemeinsamen Speicherbereich, das anzeigt, dass die Fehlersuch-Anforderung abgearbeitet worden ist, in dem Ziel-Computer; und
5) Erfassen, dass das Flag gesetzt worden ist, und in Reaktion darauf, Abrufen eines oder mehrerer Daten-Werte aus dem Ziel-Computer in dem Host-Computer.

4. Verfahren nach Anspruch 3, wobei Schritt 5) unter Verwendung eines Bus-Lesebefehls durchgeführt wird, der einen oder mehrere Daten-Werte aus einem physikalischen Adressraum anfordert, der von dem Ziel-Computer und dem Kommunikationsmedium gemeinsam genutzt wird.

5. Verfahren nach Anspruch 1, wobei Schritt 3) in einem Kemelmodus-Debugger auf dem Ziel-Computer durchgeführt wird.

6. Verfahren nach Anspruch 5, wobei Schritt 3) durchgeführt wird, ohne Interrupts auf dem Ziel-Computer zu erzeugen.

7. Verfahren nach Anspruch 5, das des Weiteren den Schritt des Setzens eines physikalischen Filterregisters auf dem Ziel-Computer umfasst, das es dem Host-Computer ermöglicht, Daten direkt von Speicherstellen in dem Ziel-Computer zu lesen.

8. Verfahren nach Anspruch 1, das des Weiteren die folgenden Schritte umfasst:
Senden eines "Ankündigungs"-Pakets, das eine Adresse des gemeinsamen Speicherbereiches enthält, von dem Ziel-Computer, und
Verwenden der Adresse des gemeinsamen Speicherbereiches aus dem "Ankündigungs"-Paket in dem Host-Computer, um eine Speicherstelle für die in Schritt 2) gespeicherte Fehlersuch-Anforderung zu bestimmen.

9. Verfahren nach Anspruch 8, wobei beim Schritt des Sendens des "Ankündigungs"-Pakets ein Isochron-Datenkanal auf dem Kommunikationsmedium verwendet wird.

10. Verfahren nach Anspruch 1, das des Weiteren den Schritt des Wiederholens der Schritte 1) bis 3) für eine Vielzahl von Ziel-Rechnern umfasst, die das Kommunikationsmedium gemeinsam nutzen.

11. Verfahren nach Anspruch 10, das des Weiteren den Schritt des Verwendens eines separaten Isochron-Datenkanals auf dem Kommunikationsmedium zur Kommunikation mit jedem der Vielzahl von Ziel-Rechnern umfasst.

12. Verfahren nach Anspruch 1, wobei die Schritte 1) bis 3) unter Verwendung eines paketbasierten seriellen Busses, der Isochron-Datenkanäle unterstützt, als das Kommunikationsmedium durchgeführt werden.

13. System für die Fem-Fehlersuche in einem Computerprogramm, das in Kombination umfasst:
einen Ziel-Computer (302; 305), auf dem die Fehlersuche in dem Computerprogramm durchgeführt werden soll;
einen Host-Computer (301), auf dem die Fehlersuche ferngesteuert wird; und
ein Kommunikationsmedium (303), das mit dem Ziel-Computer und dem Host-Computer verbunden ist,
**dadurch gekennzeichnet, dass:**
der Ziel-Computer einen gemeinsamen Speicherbereich (302B; 305B) umfasst, der auf einem Adressraum des Kommunikationsmediums abgebildet ist, so dass Adressen in dem Speicherbereich direkt für den Host-Computer zugänglich sind, ohne Interrupts auf dem Ziel-Computer zu erzeugen; und
dass der Host-Computer eine Fehlersuch-Anforderung in dem gemeinsamen Speicherbereich auf dem Ziel-Computer speichert und Fehlersuch-Ergebnisse abruft, indem er einen Datenwert aus dem gemeinsamen Speicherbereich auf dem Ziel-Computer liest.

14. System nach Anspruch 13, wobei das Kommunikationsmedium einen IEEE-1394-kompatiblen seriellen Bus umfasst.

15. System nach Anspruch 13, wobei der Ziel-Computer ein Flag in dem gemeinsamen Speicherbereich setzt, um anzuzeigen, dass die Fehlersuch-Anforderung abgearbeitet worden ist, und wobei der Host-Computer erfasst, dass das Flag gesetzt worden ist, und in Reaktion darauf einen oder mehrere Daten-Werte aus dem Ziel-Computer abruft.

16. System nach Anspruch 15, wobei der Host-Computer einen Bus-Lesebefehl verwendet, der einen oder mehrere Daten-Werte aus einem physikalischen Adressraum anfordert, der von dem Ziel-Computer und dem Kommunikationsmedium gemeinsam genutzt wird.

17. System nach Anspruch 13, wobei der Ziel-Computer einen Kemelmodus-Debugger umfasst, der Daten-Werte abruft und in dem gemeinsamen Speicherbereich auf dem Ziel-Computer speichert, um die Fehtersuch-Anforderung abzuarbeiten.

18. System nach Anspruch 17, wobei der Kemelmodus-Debugger die Fehlersuch-Anforderung abarbeitet, ohne Interrupts auf dem Ziel-Computer zu erzeugen.

19. System nach Anspruch 17, wobei der Ziel-Computer ein physikalisches Filterregister auf dem Ziel-Computer setzt, das es dem Host-Computer ermöglicht, Daten direkt von Speicherstellen in dem Ziel-Computer zu lesen.

20. System nach Anspruch 13,
wobei der Ziel-Computer ein "Ankündigungs"-Paket sendet, das eine Adresse des gemeinsamen Speicherbereiches enthält, und
wobei der Host-Computer die Adresse des gemeinsamen Speicherbereiches aus dem "Ankündigungs"-Paket verwendet, um eine Speicherstelle für die Fehlersuch-Anforderung zu bestimmen.

21. System nach Anspruch 20, wobei der Ziel-Computer das "Ankündigungs"-Paket unter Verwendung eines Isochron-Datenkanals auf dem Kommunikationsmedium sendet.

22. System nach Anspruch 13, das des Weiteren einen zweiten Ziel-Computer umfasst, der ein zweites Computerprogramm umfasst, in dem Fehlersuche durchzuführen ist,
wobei der zweite Ziel-Computer ebenfalls über das Kommunikationsmedium mit dem Host-Computer verbunden ist;
wobei der zweite Ziel-Computer einen zweiten gemeinsamen Speicherbereich umfasst, der auf dem Adressraum des Kommunikationsmediums abgebildet ist, so dass Adressen in dem zweiten Speicherbereich direkt für den Host-Computer zugänglich sind, ohne Interrupts auf dem zweiten Ziel-Computer zu erzeugen; und
wobei der Host-Computer eine zweite Fehlersuch-Anforderung in dem zweiten gemeinsamen Speicherbereich auf dem zweiten Ziel-Computer speichert und zweite Fehlersuch-Ergebnisse abruft, indem er einen zweiten Daten-Wert aus dem zweiten gemeinsamen Speicherbereich auf dem zweiten Ziel-Computer liest.

23. System nach Anspruch 22, wobei der erste Ziel-Computer einen erste Isochron-Datenkanal auf dem Kommunikationsmedium nutzt, um mit dem Host-Computer zu kommunizieren; und
wobei der zweite Ziel-Computer einen zweiten Isochron-Datenkanal auf dem Kommunikationsmedium verwendet, um mit dem Host-Computer zu kommunizieren.

24. System nach Anspruch 13, wobei das Kommunikationsmedium einen paketbasierten seriellen Bus umfasst, der Isochron-Datenkanäle unterstützt.

25. Computerlesbares Medium, das Computerbefehle umfasst, die, wenn sie durch einen Ziel-Computer ausgeführt werden, auf dem Fehlersuche in einem Programm durchgeführt wird, die folgenden Schritte durchführen:
1) Zuweisen eines gemeinsamen Speicherbereiches in dem Ziel-Computer und Abbilden des gemeinsamen Speicherbereiches auf einen Adressraum eines Kommunikationsmediums, mit dem der Ziel-Computer verbunden ist;
2) Erfassen, dass eine Fehlersuch-Anforderung für das Programm in dem gemeinsamen Speicherbereich auf dem Ziel-Computer gespeichert worden ist;
3) Speichern eines Fehlersuch-Ergebnisses in dem gemeinsamen Speicherbereich auf dem Ziel-Computer, so dass es von einem anderen Computer über das Kommunikationsmedium abgerufen werden kann, ohne die CPU des Ziel-Computers zu unterbrechen.

26. Computerlesbares Medium nach Anspruch 25, wobei die Computerbefehle, wenn sie ausgeführt werden, des Weiteren den Schritt des Durchführens von Senden eines "Ankündigungs"Paketes, das die Speicherstelle des gemeinsamen Speicherbereiches anzeigt, über das Kommunikationsmedium durchführen.

27. Computerlesbares Medium nach Anspruch 26, wobei die Computerbefehle, wenn sie ausgeführt werden, das "Ankündigungs"Paket über einen Isochron-Datenkanal des Kommunikationsmediums senden.

28. Computerlesbares Medium, das Computerbefehle umfasst, die, wenn sie durch einen Host-Computer ausgeführt werden, von dem Fem-Fehlersuche in einem Computerprogramm durchgeführt wird, das auf einen Ziel-Computer läuft, die folgenden Schritte durchführen:
1) Erfassen eines gemeinsamen Speicherbereiches in dem Ziel-Computer, der auf einem Adressraum eines Kommu nikationsmediums abgebildet ist, mit dem der Ziel-Computer verbunden ist;
2) Speichern einer Fehlersuch-Anforderung in dem gemeinsamen Speicherbereich in dem Ziel-Computer durch Ausgeben eines Befehls, der direkt in den gemeinsamen Speicherbereich schreibt; und
3) Abrufen von Fehlersuch-Ergebnissen aus dem gemeinsamen Speicherbereich durch Ausgeben eines Befehls, der direkt einen oder mehrere Daten-Werte aus dem gemeinsamen Speicherbereich liest.

29. Computerlesbares Medium nach Anspruch 28, wobei die Computerbefehle, wenn sie ausgeführt werden, den gemeinsamen Speicherbereich erfassen, indem eine Adresse des gemeinsamen Speicherbereiches aus einem "Ankündigungs"-Paket extrahiert wird, das durch den Ziel-Computer gesendet wird.

30. Computerlesbares Medium nach Anspruch 29, wobei die Computerbefehle, wenn sie ausgeführt werden, die Adresse des gemeinsamen Speicherbereichs aus einem "Ankündigungs"-Paket extrahieren, das über einen Isochron-Datenkanal des Kommunikationsmediums gesendet wird.

## Revendications

1. Procédé de débogage à distance d'un programme d'ordinateur sur un ordinateur cible (302 ; 305) dans un système comprenant un ordinateur hôte (301) et l'ordinateur cible couplés par un milieu de communication (303) qui utilise un espace d'adresse partagé avec l'ordinateur cible, le procédé comprenant les étapes suivantes :
(1) allouer une zone mémoire partagée (302B, 305B) dans l'ordinateur cible et faire correspondre la zone mémoire partagée à un espace d'adresse du milieu de communication ;
(2) à partir de l'ordinateur hôte, mémoriser une requête de débogage dans la zone mémoire partagée de l'ordinateur cible ; et
(3) dans l'ordinateur cible, retrouver la requête de débogage à partir de la zone mémoire partagée et desservir la requête de débogage.

2. Procédé selon la revendication 1, dans lequel les étapes (1) à (3) sont mises en oeuvre en utilisant un bus série compatible avec la norme IEEE-1394 en tant que milieu de communication.

3. Procédé selon la revendication 1, comprenant en outre les étapes suivantes :
(4) dans l'ordinateur cible, placer un drapeau dans la zone mémoire partagée indiquant que la requête de débogage a été desservie ; et
(5) dans l'ordinateur hôte, détecter que le drapeau a été mis et, en réponse, récupérer une ou plusieurs valeurs de données à partir de l'ordinateur cible.

4. Procédé selon la revendication 3, dans lequel l'étape (5) est réalisée en utilisant une commande de lecture de bus qui requiert une ou plusieurs valeurs de données à partir de l'intérieur d'un espace d'adresse physique qui est partagé par l'ordinateur cible et le milieu de communication.

5. Procédé selon la revendication 1, dans lequel l'étape (3) est réalisée dans un système de débogage en mode coeur dans l'ordinateur cible.

6. Procédé selon la revendication 5, dans lequel l'étape (3) est réalisée sans produire d'interruption sur l'ordinateur cible.

7. Procédé selon la revendication 5, comprenant en outre l'étape consistant à initialiser un registre de filtre physique sur l'ordinateur cible qui permet à l'ordinateur hôte de lire directement des données à partir d'emplacement mémoire dans l'ordinateur cible.

8. Procédé selon la revendication 1, comprenant en outre les étapes suivantes :
émettre à partir de l'ordinateur cible un paquet d' "annonce" contenant une adresse de la zone mémoire partagée, et
dans l'ordinateur hôte, utiliser l'adresse de la zone mémoire partagée à partir du paquet d' "annonce" pour déterminer un emplacement de mémorisation pour la requête de débogage mémorisée à l'étape (2).

9. Procédé selon la revendication 8, dans lequel l'étape d'émission du paquet d' "annonce" utilise un canal de données isochrone sur le milieu de communication.

10. Procédé selon la revendication 1, comprenant en outre l'étape consistant à répéter les étapes (1) à (3) pour plusieurs machines cible qui partagent le milieu de communication.

11. Procédé selon la revendication 10, comprenant en outre l'étape consistant à utiliser un canal de données isochrone séparé sur le milieu de communication pour communiquer avec chacune de la pluralité de machines cible.

12. Procédé selon la revendication 1, dans lequel les étapes (1) à (3) sont réalisées en utilisant comme milieu de communication un bus série fonctionnant par paquets qui comporte des canaux de données isochrones.

13. Système de débogage à distance d'un programme d'ordinateur comprenant en combinaison :
un ordinateur cible (302 ; 305) sur lequel le programme d'ordinateur doit être débogué ;
un ordinateur hôte (301) sur lequel le débogage sera commandé à distance ; et
un milieu de communication (303) couplé entre l'ordinateur cible et l'ordinateur hôte,
**caractérisé en ce que** :
l'ordinateur cible comprend une zone mémoire partagée (302B ; 305B) qui est mise en correspondance avec un espace d'adresse du milieu de communication de sorte que les adresses dans la zone mémoire sont directement accessibles pour l'ordinateur hôte sans produire d'interruption sur l'ordinateur cible ; et
l'ordinateur hôte stocke une requête de débogage dans la zone mémoire partagée sur l'ordinateur cible et récupère les résultats de débogage en lisant une valeur de données à partir de la zone mémoire partagée de l'ordinateur cible.

14. Système selon la revendication 13, dans lequel le milieu de communication comprend un bus série en conformité avec la norme IEEE-1394.

15. Système selon la revendication 13, dans lequel l'ordinateur cible établit un drapeau dans la zone mémoire partagée pour indiquer que la requête de débogage a été desservie, et dans lequel l'ordinateur hôte détecte que le drapeau a été placé et, en réponse, récupère une ou plusieurs valeurs de données à partir de l'ordinateur cible.

16. Système selon la revendication 15, dans lequel l'ordinateur hôte utilise une commande de lecture de bus qui requiert une ou plusieurs valeurs de données à partir de l'intérieur de l'espace d'adresse physique qui est partagé par l'ordinateur cible et le milieu de communication.

17. Système selon la revendication 13, dans lequel l'ordinateur cible comprend un moyen de débogage en mode coeur qui récupère et mémorise des valeurs de données dans la zone mémoire partagée sur l'ordinateur cible pour desservir la requête de débogage.

18. Système selon la revendication 17, dans lequel le moyen de débogage en mode coeur dessert la requête de débogage sans produire d'interruption sur l'ordinateur cible.

19. Système selon la revendication 17, dans lequel l'ordinateur cible initialise un registre de filtre physique sur l'ordinateur cible qui permet à l'ordinateur hôte de lire directement des données à partir de l'emplacement mémoire de l'ordinateur cible.

20. Système selon la revendication 13, dans lequel :
l'ordinateur cible émet un paquet d' "annonce" contenant une adresse de la zone mémoire partagée ; et
l'ordinateur hôte utilise l'adresse de la zone mémoire partagée à partir du paquet d'"annonce" pour déterminer l'emplacement de mémorisation pour la requête de débogage.

21. Système selon la revendication 20, dans lequel l'ordinateur cible transmet le paquet d' "annonce" en utilisant un canal de données isochrone sur le milieu de communication.

22. Système selon la revendication 13, comprenant en outre un second ordinateur cible comprenant un second programme d'ordinateur qui doit être débogué, dans lequel :
le second ordinateur cible est également couplé à l'ordinateur hôte par le milieu de communication ;
le second ordinateur cible comprend une seconde zone mémoire partagée qui est mise en correspondance avec l'espace d'adresse du milieu de communication de sorte que des adresses à l'intérieur de la seconde zone mémoire sont directement accessibles pour l'ordinateur hôte sans produire d'interruption sur le second ordinateur cible ; et
l'ordinateur hôte mémorise une seconde requête de débogage dans la seconde zone mémoire partagée sur le second ordinateur cible et récupère des seconds résultats de débogage en lisant une seconde valeur de données à partir de la seconde zone mémoire partagée sur le second ordinateur cible.

23. Système selon la revendication 22, dans lequel :
le premier ordinateur cible utilise un premier canal de données isochrone sur le milieu de communication pour communiquer avec l'ordinateur hôte ; et
le second ordinateur cible utilise un second canal de données isochrone pour communiquer avec l'ordinateur hôte.

24. Système selon la revendication 13, dans lequel le milieu de communication comprend un bus série fonctionnant par paquets qui contient des canaux de données isochrones.

25. Milieu lisible par ordinateur comprenant des instructions d'ordinateur qui, quand elles sont exécutées par un ordinateur cible sur lequel un programme doit être débogué, réalisent les étapes suivantes :
(1) allouer une zone mémoire partagée dans l'ordinateur cible et faire correspondre la zone mémoire partagée à un espace d'adresse d'un milieu de communication auquel l'ordinateur cible est couplé ;
(2) détecter qu'une requête de débogage pour le programme a été mémorisée dans la zone mémoire partagée sur l'ordinateur cible ; et
(3) mémoriser un résultat de débogage dans la zone mémoire partagée sur l'ordinateur cible de sorte qu'elle peut être retrouvée par un autre ordinateur sur le milieu de communication sans interrompre l'unité centrale de l'ordinateur cible.

26. Milieu lisible par ordinateur selon la revendication 25, dans lequel les instructions d'ordinateur, quand elles sont en difficulté, réalisent en outre l'étape consistant à émettre sur le milieu de communication un paquet d' "annonce" indiquant l'emplacement mémoire de la zone mémoire partagée.

27. Milieu lisible par ordinateur selon la revendication 26, dans lequel les instructions d'ordinateur quand elles sont exécutées transmettent le paquet d'"annonce" sur un canal de données isochrone du milieu de communication.

28. Milieu lisible par ordinateur comprenant des instructions d'ordinateur qui, quand elles sont exécutées par un ordinateur hôte à partir duquel le programme d'ordinateur s'exécutant sur un ordinateur cible sera débogué à distance, réalisent les étapes suivantes :
(1) détecter une zone mémoire partagée dans l'ordinateur cible qui est mise en correspondance avec un espace d'adresse d'un milieu de communication auquel l'ordinateur cible est couplé ;
(2) mémoriser une requête de débogage dans la zone mémoire partagée dans l'ordinateur cible en fournissant une commande qui écrit directement dans la zone mémoire partagée ; et
(3) récupérer les résultats de débogage à partir de la zone mémoire partagée en fournissant une commande qui lit directement une ou plusieurs valeurs de données à partir de la zone mémoire partagée.

29. Milieu lisible par ordinateur selon la revendication 28, dans lequel les instructions d'ordinateur, quand elles sont exécutées, détectent la zone mémoire partagée en extrayant une adresse de la zone mémoire partagée à partir d'un paquet d'"annonce" émis par l'ordinateur cible.

30. Milieu lisible par ordinateur selon la revendication 29, dans lequel les instructions d'ordinateur, quand elles sont exécutées, extraient l'adresse de la zone mémoire partagée à partir d'un paquet d' "annonce" qui est émis sur un canal de données isochrone du milieu de communication.
